(19) Europäisches Patentamt

European Patent Office

Office européen des brevets

(11) **EP 0 911 713 B1**

(12) **EUROPEAN PATENT SPECIFICATION**

(45) Date of publication and mention
of the grant of the patent:
**22.09.2004 Bulletin 2004/39**

(51) Int Cl.7: **G05B 19/23**

(21) Application number: **98402558.5**

(22) Date of filing: **15.10.1998**

(54) **Corrected servo control signal in a servo control loop**

Korrigiertes Steuersignal in Servo-Regelkreis

Signal de commande corrigé dans une boucle de commande

(84) Designated Contracting States:
**DE FR GB IT**

(30) Priority: **21.10.1997 EP 97402486**

(43) Date of publication of application:
**28.04.1999 Bulletin 1999/17**

(73) Proprietor: **DEUTSCHE THOMSON-BRANDT GMBH**
**78048 Villingen-Schwenningen (DE)**

(72) Inventor: **Mahr, Peter**
**92648 Boulogne Cedex (FR)**

(74) Representative: **Thies, Stephan et al**
**Deutsche Thomson-Brandt GmbH,**
**European Patent Operations,**
**Karl-Wiechert-Allee 74**
**30625 Hannover (DE)**

(56) References cited:
**EP-A- 0 285 800          EP-B- 0 211 912**
**EP-B- 0 260 637          GB-A- 2 119 189**
**US-A- 4 613 961**

## Description

The present invention relates to a method and to a device for obtaining a corrected servo control signal in a servo control loop. A servo control loop is a closed loop used to keep an object moving along a track centered on that track by giving servo control signals to a positioning device which positions the object laterally to the track. A servo control signal may for different reasons be erroneous and appropriate measures must be taken to detect possible errors and to obtain the corrected servo control signal.

US 5,434,725, Hirose et al., discloses a device for positioning a magnetic head relative to a disc-shaped data carrier. The magnetic head reads servo data which is subsequently processed to obtain a servo control signal and a number. A comparator compares the number to a predetermined value and sets an error flag should the number be less than the predetermined value. The latter case is an indication for defective servo data. Normally, the servo control signal is used as an input for positioning the magnetic head but if the error flag is set the servo control signal is erroneous. The use of the erroneous servo control signal would possibly lead to a positioning of the magnetic head far off track, an error which is difficult to recover from. Instead a previous servo control signal, obtained from previously read and processed servo data is used to position the magnetic head. This compensates for the defective servo data and minimizes positioning errors.

The disclosed device handles errors due to defective servo data thereby taking into account an evolution of the servo control signal prior to the occurrence of defective servo data. It takes into account a dynamical behaviour of the servo control signal by using the previous servo control signal instead of the erroneous one.

However errors due to defective servo data belong to only one type of error out of many possible types. Other occurring errors may be due to sudden peaks in the servo control signal. These peaks may be caused by an excessive deviation of a device reading the servo data away from e.g. a servo track containing the servo data. Excessive deviations typically happen when a sudden external mechanical force affects the device reading the servo data or perhaps a carrier carrying the servo data.

US 4,613,961, Aarts, discloses an apparatus for reading an optical record carrier. It has an amplitude detector for supplying one or two control signals in dependence on the amplitude of an error signal to a limiter which limits the error signal.

An aim of the present invention is to correct errors in the servo control signal which may be caused not only by defective servo data. The errors should be corrected taking into account the servo control signal's dynamic.

A solution to the depicted problem is according to the invention found in a method for obtaining a corrected servo control signal in a servo control loop which comprises the steps of reading servo data, processing read servo data to obtain at least a servo control signal, substituting a determined corrected servo control signal to the servo control signal if a value of processed read servo data overruns a determined limit. The method further comprises the steps of giving to the determined corrected servo control signal a value proportional to the determined limit, calculating a new limit and substituting the new limit to the determined limit.

The corrected servo control signal may according to the present invention take into account a dynamic evolution of the servo control signal which is used to calculate the new limit. The corrected servo signal is used instead of the servo control signal if the servo control signal exhibits a dynamic behaviour which overruns a limit defined by the permanently actualized limit. This prevents errors due to the sudden peaks in the control signal.

In a first preferred embodiment of the method according to the invention following steps are comprised : setting a flag if a value of processed read servo data overruns the determined limit, substituting the determined corrected servo signal to the servo control signal if the flag is set, calculating the new limit as a function of the flag and a value of the servo control signal.

In a second preferred embodiment of the method according to the invention the step of calculating comprises steps of calculating the new limit from the determined limit by increasing or decreasing said determined limit depending on whether it is an upper limit or a lower limit respectively, if the flag is set. In the opposite case of the latter the calculating is done by increasing or decreasing said determined limit if it is an upper limit and if an absolute value of a difference between the determined limit and the value of the servo control signal is smaller or greater than a determined A-value respectively, and by increasing or decreasing the determined limit if it is a lower limit and if an absolute value of a difference between the determined limit and the value of the servo control signal is greater or smaller than the determined $\Delta$-value respectively.

The second preferred embodiment gives a simple way to calculate a new limit. The increasing or decreasing of the determined limit may for example, be done by adding or substracting a constant to the determined limit.

In a third preferred embodiment of the method according to the invention a lower limit and an upper limit respectively are used for the determined limit.

Hence a plurality of steps like setting a flag will be performed for the lower limit on one hand and for the upper limit on the other hand. The control signal is confined between the lower limit and the upper limit.

The invention will in the following be explained using examples in order to more clearly show some features.

Figures 1 to 7 will be referred to throughout the specifications wherein :

FIG. 1 contains a diagram of a servo loop positioning device,
FIG. 2 contains a flowchart illustrating a method for obtaining a corrected servo control signal,
FIG. 3 contains curves illustrating a servo control signal and a corrected servo control signal,
FIG. 4 contains a flowchart illustrating a preferred embodiment of a method for obtaining a corrected servo control signal,
FIG. 5 contains curves of a servo control signal and of limit values,
FIG. 6 contains a flowchart illustrating a calculating of a new limit,
FIG. 7 contains curves of a servo control signal, lower limit and upper limit values.

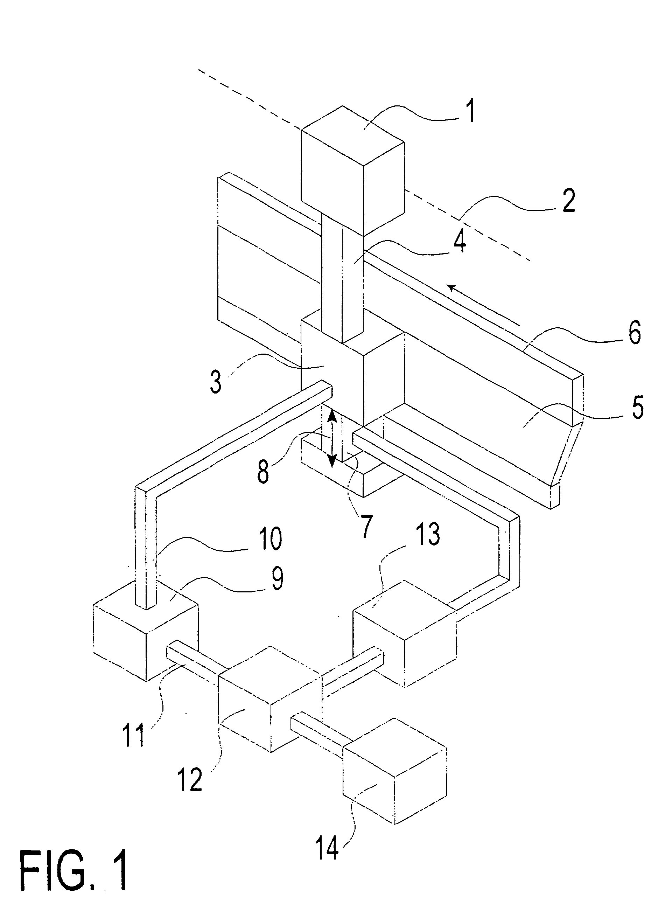

The servo loop positioning device show in FIG. 1 is used to position an object 1 relative to a predetermined track 2 (represented as a dotted line). The object 1 may for example be a magnetic reading/writing head which reads/writes data in a data track which is parallel to the predetermined track 2. The object 1 is rigidly connected to on a tracking head 3 using a rigid rod 4. The tracking head 3 comprises reading means (not shown) (e.g. magnetic gaps, longitudinal driving means) which allow to read servo data (not shown) recorded along a servo track 5. The servo track 5 is carried by a data carrier 6 and at all times parallel to the predetermined track 2. This means that the data carrier 6 is fixed in space relatively to the predetermined track 2. For this reason it would be useful to have for the example of the magnetic head given above the data track on the data carrier 6 parallel to the servo track 5. Lateral positioning means 7 allow to position the tracking head 3 in a direction represented by a double arrow 8, i.e. laterally to the servo track 5. The lateral positioning means 7 may for example be a piezo cristal device. The read servo data is transmitted to signal processing means 9 through a cable 10. The signal processing means 9 process the read data to obtain at an output 11 a servo control signal. The servo control signal may later be used to feed the lateral positioning means 7. The servo control signal is obtained after the servo data processor 9 has determined a lateral position of the tracking head 3 relative to the servo track 5. The servo control signal has a value such that when fed to the lateral positioning means 7 the tracking head 3 is positioned to be laterally centered on the servo track 5. The output 11 is connected to comparing means 12 in which a flag is set. Depending on the flag, output means 13 connected to an output of comparing means 12 generate a determined corrected servo control signal. The servo control signal or the determined corrected servo control signal are transmitted and feed to the lateral positioning means 7.

The flag is set by the comparing means as a result of a comparison of a value of the servo control signal to a determined limit. More precisely the flag is set if the value of the servo control signal overruns the determined limit. Even more precisely, if the determined limit is an upper limit, the flag is set when the value of the servo control signal is greater than this upper limit. If the value of the servo control signal is smaller than this upper limit, i.e. the limit is not overrun, the flag is left unset.

An updating means 14 connected to the comparing means updates the determined limit by calculating as a function of the flag and of the value of the servo control signal a new limit and substituting this to the determined limit.

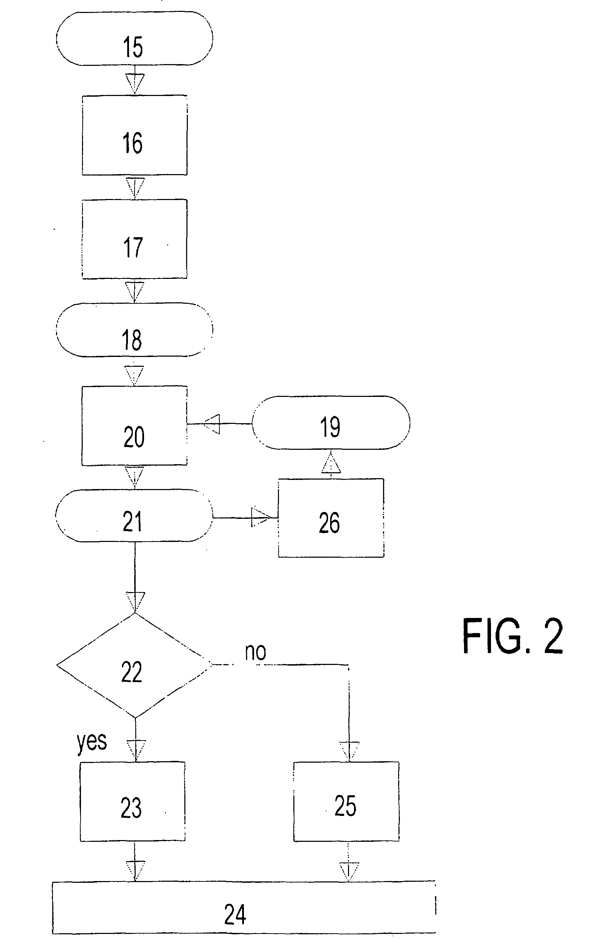

A flowchart in FIG.2 illustrates how either a corrected servo control signal or a servo control signal is obtained and transmitted to be used in a positioning step 24. Servo data 15 is read in a reading step 16 and subsequently processed in a processing step 17 to obtain a servo control signal 18. A determined limit 19 and the servo control signal 18 are compared in a comparing step 20 and the flag 21 is set as lined out above. Depending on a condition "flag set" in case consideration 22, if the condition is "yes" a determined corrected servo control signal is computed in a step 23 and transmitted to the positioning step 24. If the condition is "no" the servo control signal 18 is transmitted in a step 25 to the positioning step 24.

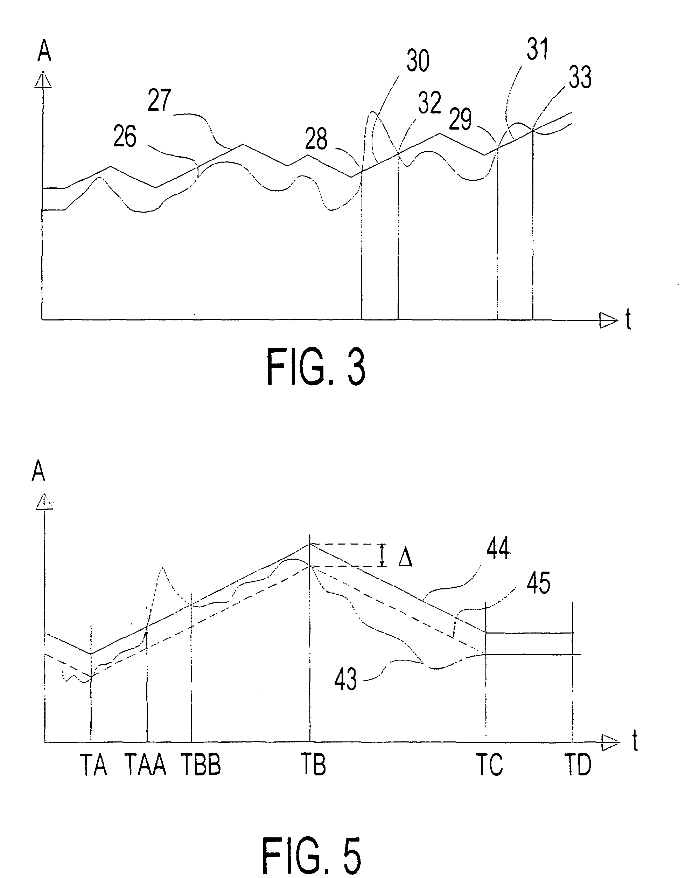

Referring to FIG.3 an example curve 26 of a servo control signal and an example curve 27 of a determined limit are shown. Both curves 26 and 27 have amplitudes represented on an axis A, which vary as a function of time t. The determined limit is in this case an upper limit. This means that if the servo control signal becomes greater than the determined limit as in intersections 28 and 29, determined corrected servo control signals 30 and 31 are computed and substituted to the servo control signal until the latter becomes smaller than the determined limit, i.e. in intersections 32 and 33. The corrected servo control signals 30 and 31 are equal to the determined limit and their value lies on the curve 27.

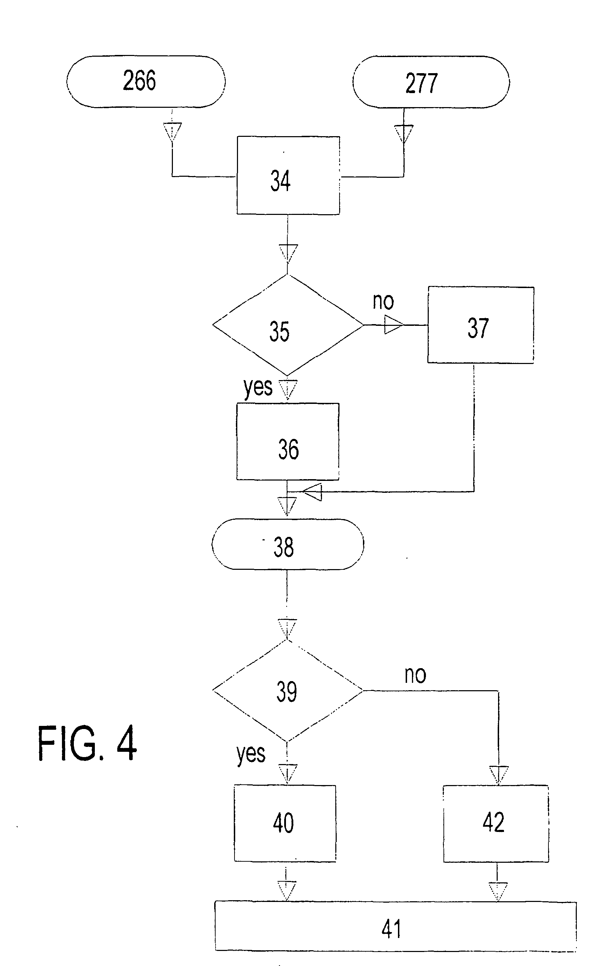

A flowchart in FIG. 4 illustrates how the corrected servo control signal 30 and 31 are obtained and substituted to the servo control signal. The servo control signal 266 from curve 26 and the determined limit 277 from curve 27 are compared in a step 34 to see if the servo control signal 266 is greater than the determined limit 277. If this is the case, a decision step 35 leads to setting a flag in a step 36. In an opposite case, the decision step 35 leads to a step 37 where the flag is made sure to be unset. Either case leads to the obtention of a flag 38 which is checked in a decision step 39. In case the flag is set, the corrected servo signal 30 (or 31) is made equal to the value of the determined limit (curve 27) in step 40 before being fed to a positioning step 41. In case the flag is unset step 42 feeds the servo control signal 266 to the positioning step 41.

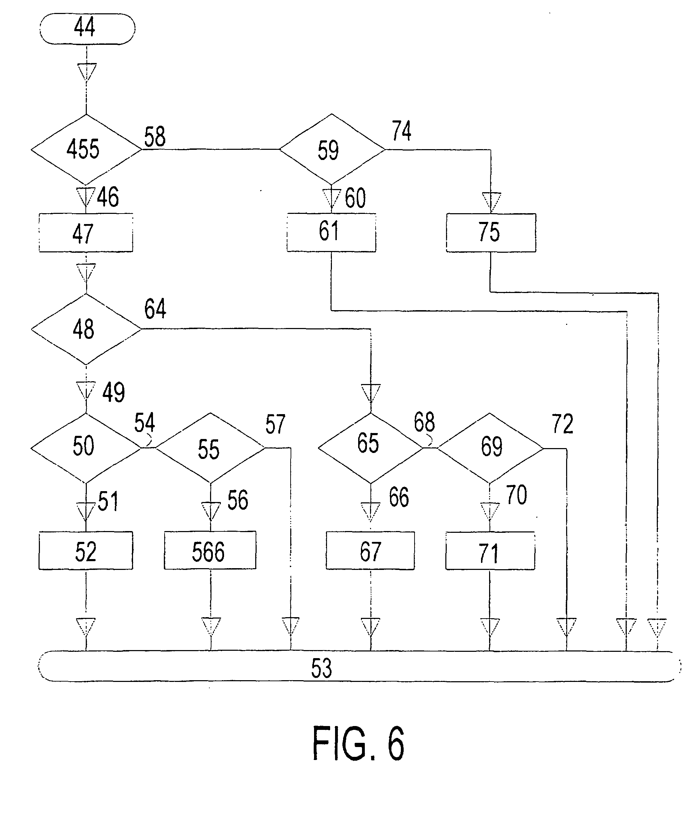

FIG. 5 shows a curve 43 of a servo control signal and a curve 44 of a determined limit, both of which varying as a function of time t. The curves 43 and 44 will help to illustrate a function which is used to calculate a new limit departing from the determined limit. A dotted curve 45 is parallel to the curve 44 at a distance $\Delta$.

Referring now to a flowchart in FIG. 6 where it is illustrated how the determined limit is updated, a first case consideration 455 checks if an error flag is set. As explained above the error flag is set when the servo control signal overruns the determined limit. If the flag is unset (case 46) an absolute value $|\delta|$ of a difference between the determined limit DE and the servo control signal SCS is computed in step 47 :

$$|\delta| = |DE - SCS|$$

A second case consideration 48 checks if the determined limit is an upper limit. In the affirmative case 49 which is the one illustrated in FIG. 5 a third case consideration 50 checks if $|\delta|$ is smaller than the distance $\Delta$. Referring to FIG. 5 this would means that the curve 43 of the servo control signal is comprised between the dotted curve 45 and the curve 44 of the determined limit.

If such is the case (case 51) the determined limit is increased in step 52 to obtain the new limit 53. This is what occurs between instants TA and TAA or TBB and TB for example. In the example of FIG. 5 a function FI(DE) used to calculate the new limit NE is of the form :

$$NE = FI(DE) = DE + a$$

in which a is positive when the determined limit is to be increased. If in the third case consideration 50 $|\delta|$ is not smaller than $\Delta$ (case 54) a fourth case consideration 55 checks if $|\delta|$ is greater than $\Delta$. If true (case 56) the determined limit is decreased in a step 566 according to a function FD(DE) to obtain the new limit :

$$NE = FD(DE) = DE - a \qquad (a>0)$$

This is what occurs between instants TB and TC for example. If the fourth case consideration 55 reveals false (case 57), then $|\delta|$ is equal to the distance $\Delta$ and the new limit NE is set equal to the determined limit DE :

$$NE = DE$$

This is what occurs between instants TC and TD for example.

If the first case consideration 455 reveals that an error flag is set (case 58) a fifth case consideration 59 checks if the determined limit is an upper limit. In an affirmative case 60 the determined limit increased in step 61 by calculating the new limit NE with the function NE = FI(DE). This is what occurs between instants TAA and TBB for example, where the servo control signal overruns the determined limit.

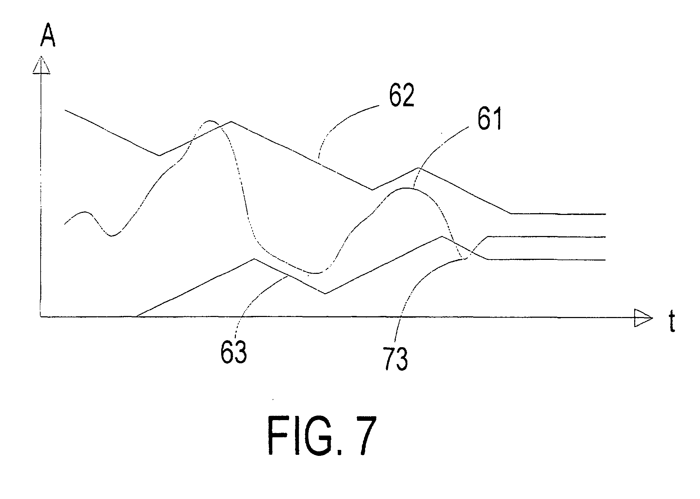

Another example for a servo control signal is given by a curve 61 in FIG. 7. A curve 62 representing a determined upper limit evolves in a way similar to the one described for FIG. 5 and according to the flowchart in FIG.6. A further curve 63 represents a determined lower limit which varies as a function of the time t. The flowchart in FIG. 6 illustrates how a new lower limit may be calculated departing from the determined lower limit.

If the first case consideration 455 reveals that the error flag is unset (case 46) then $|\delta|$ is computed in 47 as $|\delta| = |$ DM - SCS$|$, DM being the value of the determined lower limit.

In the second case consideration 48 the result is negative since the determined limit is a lower limit and branch 64 leads to a sixth case consideration 65 which checks if $|\delta|$ is smaller than $\Delta$. In the affirmative case 66 the determined lower limit is decreased in 67 according to the function FD(DM) to obtain a new limit (lower limit) NM :

$$NM = FD(DM) = DM - a \qquad (a > 0)$$

If the sixth case consideration 65 reveals false (case 68) a seventh case consideration 69 checks if $|\delta|$ is greater than $\Delta$. In the affirmative (case 70) the determined lower limit is increased in 71 according to the function FI (DM) to obtain the new limit (lower limit) NM :

$$NM = FI (DM) = DM + a \qquad (a < 0)$$

If the seventh case consideration 69 reveals false (case 72) then $\delta$ is equal to the distance $\Delta$ and the new limit (lower limit) NM is set equal to the determined lower limit DM :

$$NM = DM$$

Coming back to the first case consideration 455, if it is true (case 58) i.e. the servo control signal overruns the determined lower limit, e.g. peak 73 in FIG. 7, then the fifth case consideration 59 results in false (case 74) because the determined limit is a lower limit and the determined lower limit is decreased in a step 75 with the function NM = FD (DM).

The example shown in FIG. 7 readily demonstrates how the servo control signal's dynamic is taken into account. The curves 62 and 63 are adapted to the dynamic behaviour of the servo control signal curve 61, i.e. at the left side of the diagram where relatively important variations of the servo control signal occur the curves 62 and 63 are wide apart. The curves 62 and 63 evolve to a nearer position to each other at the right hand side of FIG. 7 where variations of the servo control signal become relatively insignificant of the determined limit (lower limit and/or upper limit).

The updating as illustrated in the flowchart of FIG.6 may be implemented in a device, e.g. the device shown in FIG. 1. For this purpose the updating means 14 comprise first adding means (not shown) which perform the increasing and decreasing of the determined limit as in steps 52, 566, 67 and 71 of the flowchart. The updating means further comprise second adding means (not shown) which allow to calculate $|\delta|$ as described for step 47 and at least further comparing means (not shown) to perform e.g. the case consideration 48.

## Claims

1. A method for obtaining a corrected servo control signal in a servo control loop comprising the steps of :

   - reading (16) servo data,
   - processing (17) read servo data to obtain at least a servo control signal (18),
   - substituting (23) a determined corrected servo control signal to the servo control signal if a value of processed read servo data overruns a determined limit (19),
   - giving to the determined corrected servo control signal a value proportional to the determined limit,

   the method being **characterized in that** it further comprises the steps of :

   - if a value of the processed read servo data overruns the determined limit (19), calculating (26) a new limit from the determined limit (44) by increasing (61) or, respectively, decreasing (75) the determined limit depending on whether it is an upper limit (60) or a lower limit (74), respectively,
   - if a value of the processed read servo data does not overrun the determined limit (19), calculating (26) a new limit from the determined limit (44) by increasing (52) or, respectively, decreasing (566) the determined limit if it is an upper limit (49) and if the absolute value of the difference (47) between the determined limit and the value of the servo control signal is smaller (51) or greater (56) than a determined $\Delta$-value, respectively,
   - if a value of the processed read servo data does not overrun the determined limit (19), calculating (26) a new limit from the determined limit (44) by increasing (52) or, respectively, decreasing (566) the determined limit if it is a lower limit (64) and if the absolute value of the difference (47) between the determined limit and the value of the servo control signal is greater (70) or smaller (66) than the determined $\Delta$-value, respectively.
   - substituting the new limit to the determined limit.

2. The method according to claim 1, **characterized by** additionally comprising the step of:

   - if a value of the processed read servo data does not overrun the determined limit (19), setting (57, 72) the new limit equal to the determined limit if the absolute value of the difference between the determined limit and the value of the servo control signal is equal to the determined $\Delta$-value.

3. The method according to claim 1 or 2, **characterized in that** a lower limit (63) and an upper limit (62), respectively, are used as the determined limit.

4. A device for obtaining a corrected servo control signal in a servo loop comprising:

   - reading means (3) to read servo data from a data carrier (6),
   - processing means (9) to obtain at least a servo control signal from read servo data,
   - first comparing means (12) to compare a value of processed read servo data to a determined limit, and
   - output means (13) which generate a determined corrected servo control signal proportional to the determined limit if a value of processed read servo data overruns the determined limit,

   **characterized in that** it further comprises updating means (14) to calculate a new limit as a function of a value of the servo control signal and of whether a value of processed read servo data overruns the determined limit and to substitute the new limit to the determined limit, and **in that** the updating means (14) comprise:

   - first adding means for increasing and/or decreasing the determined limit by adding or substracting a predetermined value to it,
   - second adding means for determining the absolute value of the difference between the determined limit and the value of the servo control signal,
   - second comparing means to compare the absolute value to a determined $\Delta$-value and to set a further flag, the first comparing means and the second comparing means being connected to the first adding means.

5. The device according to claim 4, **characterized in that** a lower limit and an upper limit, respectively, are used as the determined limit.

6. A device according to claim 4 or 5 for servo loop positioning an object (1) relative to a predetermined track (2), **characterized in that**

- the reading means is a reading means for reading servo data recorded along at least one servo track (5) on a data carrier (6) which is fixed in space relative to the predetermined track, the servo track being parallel to the predetermined track,

and **in that** the device further comprises:

- a tracking head (3), to which the object is rigidly maintained, the tracking head comprising the reading means,
- lateral positioning means (7) for positioning the tracking head in a direction (8) lateral to the servo track,
- signal processing means (9) for processing read servo data, thereby determining a lateral position of the tracking head relative to the servo track and for producing a servo control signal for the lateral positioning means such that the tracking head is positioned to be laterally centered on the servo track,

and **in that** the output means (13) feed the corrected determined servo control signal to the lateral positioning means by substituting it to the servo control signal.

## Patentansprüche

1. Verfahren zum Erhalt eines korrigierten Servosteuerungssignals in einem Servosteuerungskreis, das folgende Schritte umfaßt:

Lesen (16) von Servodaten,
Verarbeiten (17) gelesener Servodaten, um mindestens ein Servosteuerungssignal (18) zu erhalten,
Ersetzen (23) des Servosteuerungssignals durch ein bestimmtes korrigiertes Servosteuerungssignal, wenn ein Wert verarbeiteter gelesener Servodaten eine bestimmte Grenze (19) überschreitet,
Setzen des bestimmten korrigierten Servosteuerungssignals auf einen Wert proportional zur bestimmten Grenze,

wobei das Verfahren **dadurch gekennzeichnet ist, daß** es weiterhin folgende Schritte umfaßt:

Berechnen (26), wenn ein Wert der verarbeiteten gelesenen Servodaten die bestimmte Grenze (19) überschreitet, einer neuen Grenze aus der bestimmten Grenze (44) durch Erhöhen (61) bzw. Vermindern (75) der bestimmten Grenze in Abhängigkeit davon, ob es eine obere Grenze (60) oder eine untere Grenze (74) ist,
Berechnen (26), wenn ein Wert der verarbeiteten gelesenen Servodaten die bestimmte Grenze (19) nicht überschreitet, einer neuen Grenze aus der bestimmten Grenze (44) durch Erhöhen (52) bzw. Vermindern (566) der bestimmten Grenze, wenn es eine obere Grenze (49) ist und der absolute Wert der Differenz (47) zwischen der bestimmten Grenze und dem Wert des Servosteuerungssignals kleiner (51) oder größer (56) als ein bestimmter $\Delta$-Wert ist,
Berechnen (26), wenn ein Wert der verarbeiteten gelesenen Servodaten die bestimmte Grenze (19) nicht überschreitet, einer neuen Grenze aus der bestimmten Grenze (44) durch Erhöhen (52) bzw. Vermindern (566) der bestimmten Grenze, wenn es eine untere Grenze (64) ist und der absolute Wert der Differenz (47) zwischen der bestimmten Grenze und dem Wert des Servosteuerungssignals größer (70) oder kleiner (66) als der bestimmte $\Delta$-Wert ist,
Ersetzen der bestimmten Grenze durch die neue Grenze.

2. Verfahren nach Anspruch 1, **gekennzeichnet durch** den folgenden zusätzlichen Schritt:

Gleichsetzen (57, 72), wenn ein Wert der verarbeiteten gelesenen Servodaten die bestimmte Grenze (19) nicht überschreitet, der neuen Grenze mit der bestimmten Grenze, wenn der absolute Wert der Differenz zwischen der bestimmten Grenze und dem Wert des Servosteuerungssignals dem bestimmten $\Delta$-Wert entspricht.

3. Verfahren nach Anspruch 1 oder 2, **dadurch gekennzeichnet, daß** eine untere Grenze (63) bzw. eine obere Grenze (62) als die bestimmte Grenze verwendet wird.

4. Vorrichtung zum Erhalt eines korrigierten Servosteuerungssignals in einem Servokreis, die folgendes umfaßt:

Lesemittel (3), um Servodaten von einem Datenträger (6) zu lesen,
Verarbeitungsmittel (9), um mindestens ein Servosteuerungssignal aus gelesenen Servodaten zu erhalten,

erste Vergleichsmittel (12), um einen Wert verarbeiteter gelesener Servodaten mit einer bestimmten Grenze zu vergleichen, und

Ausgabemittel (13), die ein bestimmtes korrigiertes Servosteuerungssignal proportional zur bestimmten Grenze erzeugen, wenn ein Wert verarbeiteter gelesener Servodaten die bestimmte Grenze überschreitet,

**dadurch gekennzeichnet, daß** sie weiterhin Aktualisierungsmittel (14) umfaßt, um eine neue Grenze zu berechnen, als eine Funktion eines Werts des Servosteuerungssignals sowie ob ein Wert verarbeiteter gelesener Servodaten die bestimmte Grenze überschreitet, und die bestimmte Grenze durch die neue Grenze zu ersetzen, und daß die Aktualisierungsmittel (14) folgendes umfassen:

erste Additionsmittel zum Erhöhen und/oder Vermindern der bestimmten Grenze, indem ihr ein vorbestimmter Wert zuaddiert oder davon subtrahiert wird,

zweite Additionsmittel, um den absoluten Wert der Differenz zwischen der bestimmten Grenze und dem Wert des Servosteuerungssignals zu bestimmen,

zweite Vergleichsmittel, um den absoluten Wert mit einem bestimmten $\Delta$-Wert zu vergleichen und einen weiteren Merker zu setzen, wobei die ersten Vergleichsmittel und die zweiten Vergleichsmittel mit den ersten Additionsmitteln verbunden sind.

**5.** Vorrichtung nach Anspruch 4, **dadurch gekennzeichnet, daß** eine untere Grenze bzw. eine obere Grenze, als die bestimmte Grenze verwendet wird.

**6.** Vorrichtung nach Anspruch 4 oder 5 zur Servokreispositionierung eines Gegenstands (1) im Verhältnis zu einer vorbestimmten Bahn (2), **dadurch gekennzeichnet, daß**

das Lesemittel ein Lesemittel zum Lesen von Servodaten ist, die entlang mindestens einer Servobahn (5) auf einem Datenträger (6) aufgezeichnet werden, der im Verhältnis zur vorbestimmten Bahn räumlich fixiert ist, wobei die Servobahn parallel zur vorbestimmten Bahn verläuft,

und daß die Vorrichtung weiterhin folgendes umfaßt:

einen Bahnführungskopf (3), an dem der Gegenstand starr gehalten wird, wobei der Bahnführungskopf das Lesemittel umfaßt,

Seitenpositionierungsmittel (7) zur Positionierung des Bahnführungskopfs in einer Richtung (8) seitlich zur Servobahn,

Signalverarbeitungsmittel (9) zur Verarbeitung gelesener Servodaten, wodurch eine seitliche Position des Bahnführungskopfs im Verhältnis zur Servobahn bestimmt wird, und zur Erzeugung eines Servosteuerungssignals für das Seitenpositionierungsmittel, so daß der Bahnführungskopf so positioniert wird, daß er auf der Servobahn seitlich zentriert ist,

und daß die Ausgabemittel (13) das korrigierte bestimmte Servosteuerungssignal dem Seitenpositionierungsmittel zuleiten, indem sie das Servosteuerungssignal dadurch ersetzen.

## Revendications

**1.** Procédé d'obtention d'un signal de commande corrigé dans une boucle de commande, composé des étapes de :

- lecture (16) de données,
- de traitement (17) de données lues pour obtenir au moins un signal de commande (18),
- de substitution (23) d'un signal de commande corrigé déterminé au lieu du signal de commande si une valeur de données lues traitées dépasse une limité déterminée (19).
- de fourniture, au signal de commande corrigé déterminé, d'une valeur proportionnelle à la limite déterminée,

le procédé étant **caractérisé en ce qu'**il comprend les étapes de :

- si une valeur de données lues traitées dépasse la limite déterminée (15), calcul (26 d'une nouvelle limite à partir de la limite déterminée (44) en augmentant (61) ou, respectivement, diminuant (75) la limite déterminée suivant qu'il s'agisse d'une limite haute (60) ou d'une limite basse (74), respectivement,
- si une valeur de données lues traitées ne dépasse pas la limite déterminée (19), calcul (26) d'une nouvelle limite à partir de la limite déterminée (44) en augmentant (52) ou, respectivement, diminuant (566) la limite déterminée si c'est une limite haute (49) et si la valeur absolue de la différence (47) entre la limite déterminée et la valeur du signal de commande est inférieure (51) ou supérieure (56) à une valeur $\Delta$ déterminée, respectivement,
- si une valeur de données lues traitées ne dépasse pas la limite déterminée (19), calcul (26) d'une nouvelle limite à partir de la limite déterminée (44) en augmentant (52) ou, respectivement, diminuant (566) la limite déterminée si c'est une limite basse (64) et si la valeur absolue de la différence (47) entre la limite déterminée et la valeur du signal de commande est supérieure (70) ou inférieure (66) à la valeur Δ déterminée, respectivement.

- substitution de la nouvelle limite au lieu de la limite déterminée.

2. Procédé selon la revendication 1, **caractérisé par** l'intégration en outre des étapes de :

- si une valeur de données lues traitées ne dépasse pas la limite déterminée (19), définition (57, 72) de la nouvelle limite égale à la limite déterminée si la valeur absolue de la différence entre la limite déterminée et la valeur du signal de commande est égale à la valeur Δ déterminée.

3. Procédé selon la revendication 1 ou 2, **caractérisé en ce qu'**une limite basse (63) et une limite haute (62), respectivement, sont utilisées comme limite déterminée.

4. Dispositif d'obtention d'un signal de commande corrigé dans une boucle de commande, comprenant :

- des moyens de lecture (3) pour lire des donnée à partir d'un support de données (6),
- des moyens de traitement (9) pour obtenir au moins un signal de commande à partir de données lues,

un premier moyen de comparaison (12) pour comparer une valeur de données lues traitées avec une limite déterminée, et

- de moyens de sortie (13) qui génèrent un signal de commande corrigé déterminé proportionnel à la limite déterminée si une valeur du données lues traitées dépasse la limite déterminée,

**caractérisé en ce qu'**il comprend en outre des moyens de mise à jour (14) pour calculer une nouvelle limite comme une fonction d'une valeur du signal de commande et d'une valeur de données lues traitées dépassant ou non la limite déterminée, et pour substituer la nouvelle limite au lieu de la limite déterminée, et **en ce que** les moyens de mise à jour (14) comprennent :

- un premier moyen d'ajout pour augmenter et/ou diminuer la limite déterminée en y ajoutant ou soustrayant une valeur prédéterminée,
- un second moyen d'ajout pour déterminer la valeur absolue de la différence entre la limite déterminée et la valeur du signal de commande,
- un second moyen de comparaison pour comparer la valeur absolue avec une valeur Δ déterminée et pour définir un autre indicateur, le premier moyen de comparaison et le second moyen de comparaison étant connectés au premier moyen d'ajout.

5. Dispositif selon la revendication 4, **caractérisé en ce qu'**une limite basse et une limite haute, respectivement, sont utilisées comme limite déterminée.

6. Dispositif selon la revendication 4 ou 5 pour le positionnement en boucle de commande d'un objet (1) par rapport à une piste déterminée (2), **caractérisé en ce que**

- le dispositif de lecture est un moyen de lecture pour lire des données enregistrées sur au moins une piste (5) sur un support de données (6) qui est fixé dans l'espace par rapport à la piste prédéterminée, la piste étant parallèle à la piste déterminée, et **en ce que** le dispositif comprend en outre :

- une tête d'alignement (3) à laquelle l'objet est rigoureusement connecté, la tête d'alignement étant composée des moyens de lecture,
- des moyens de positionnement latéral (7) pour positionner la tête d'alignement dans une direction (8) latérale à la piste,
- de moyens de traitement de signaux (9) pour traiter des données lues, déterminant de ce fait une position latérale de la tête d'alignement par rapport à la piste et pour produire un signal de commande pour les moyens de positionnement latéral tels que la tête d'alignement soit positionnée de sorte à être latéralement centrée sur la piste,

et **en ce que** les moyens de sortie (13) transfèrent le signal de commande déterminé corrigé vers les moyens de positionnement latéral en le substituant au lieu du signal de commande.

FIG. 1

FIG. 2

FIG. 3

FIG. 5

FIG. 4

FIG. 6

FIG. 7